Europäisches Patentamt

European Patent Office

Office européen des brevets

(11) Veröffentlichungsnummer: **0 282 763 B1**

# (12) EUROPÄISCHE PATENTSCHRIFT

(45) Veröffentlichungstag der Patentschrift: **23.12.92**

(21) Anmeldenummer: **88102537.3**

(22) Anmeldetag: **22.02.88**

(51) Int. Cl.⁵: **B65D 41/04**

(54) Schraubhülse aus Kunststoff.

(30) Priorität: **16.03.87 DE 3708472**

(43) Veröffentlichungstag der Anmeldung:
**21.09.88 Patentblatt 88/38**

(45) Bekanntmachung des Hinweises auf die
Patenterteilung:
**23.12.92 Patentblatt 92/52**

(84) Benannte Vertragsstaaten:
**AT BE CH DE ES FR GB IT LI NL SE**

(56) Entgegenhaltungen:
**DE-A- 2 638 619**
**DE-B- 2 336 789**
**FR-A- 1 270 357**
**FR-A- 2 395 121**
**US-A- 2 317 823**

(73) Patentinhaber: **ZELLER PLASTIK GmbH**
**Barlstrasse 46**
**W-5583 Zell/Mosel(DE)**

(72) Erfinder: **Thanisch, Klaus**
**Am Rosenkreuz 6**
**W-5583 Zell/Mosel(DE)**

(74) Vertreter: **Schroeter, Helmut et al**
**Schroeter, Fleuchaus, Lehmann Wehser,**
**Holzer & Gallo Patentanwälte Wolfratshauser**
**Strasse 145 Postfach 71 03 50**
**W-8000 München 71(DE)**

# Beschreibung

Die Erfindung bezieht sich auf eine Verschlußkappe aus Kunststoff mit nach innen vorstehenden Nocken nach Art von bekannten (Auf-)Prellverschlüssen, die im Spritzgußverfahren hergestellt werden und unter Anwendung einer axialen Bewegung der Formhälften gegeneinander abgestreift werden können.

Bekannte Prellverschlüsse werden unter Anwendung einer axialen Kraft auf Behältermündungen gebracht, wobei die an der inneren Mantelfläche der Verschlußkappe angeordneten Nocken über einen oder mehrere Prellvorsprünge an der Behältermündung gepreßt werden und hinter diesen Prellvorsprüngen einrasten. Die bekannten Prellvorsprünge haben vorzugsweise die Form von Ringen.

Derartige bekannte Verschlußkappen üben auf die Behältermündung keine axiale Kraft aus, die für die Abdichtung zwischen Verschlußkappe und Behälter ausgenutzt werden könnte. Eine Abdichtung kann also nur durch eine radiale Vorspannung bewirkt werden, was eine sehr präzise Herstellung der Mantelflächen der Behältermündung notwendig macht und bei besonders kritischen Füllgütern, auch bei bester Mündungsoberfläche, zu Undichtigkeit führen kann.

Darüber hinaus sitzen die Prellverschlüsse gewöhnlich so fest auf dem Behälter, daß ein Wiederöffnen von Hand nicht möglich ist.

Diese Eigenschaften von Prellverschlüssen können sich nachteilig auswirken, wenn Behälter mit schwierigen Mündungscharakteristiken angewendet werden, das Füllgut kritisch ist oder z. B. der Verbraucher den Behälter nachfüllen soll.

In solchen Fällen werden bekanntermaßen Schraubverschlüsse eingesetzt, bei denen Gewindeschnüre außen an der Behältermündung und innen am Verschluß dergestellt zusammenwirken, daß der Verschluß durch Drehen in einer Richtung (gewöhnlich Rechtsdrehung) über die Behältermündung geschraubt und in der anderen Drehrichtung von der Behältermündung entfernt werden kann.

Wenn die Verschlußkappe fest angezogen ist, übt sie eine axiale Kraft auf die Behältermündung aus und erhöht damit die Dichtsicherheit beträchtlich. Sie kann auch auf einfache Weise von der Mündung abgeschraubt und wieder zugeschraubt werden.

Bei der Herstellung von Schraubverschlußkappen hat sich gezeigt, daß ein einfaches Abstreifen vom Kern der Spritzgußform zu Ergebnissen führt, die nicht akzeptabel sind:

- Die Gewindeschnüre im Verschluß werden gewaltsam verformt und dadurch in der Funktion stark beeinträchtigt.

- Vorstehende lange Elemente, wie durchgehende Gewinde oder in lange Abschnitte unterteilte Gewinde, zeichnen sich als Folge des Herausspringens aus Formkernvertiefungen deutlich und unschön an der Außenmantelfläche der Verschlußkappe ab.

Bei der Herstellung von Schraubverschlußkappen, die unter Anwendung eines Schraubvorganges entformt werden, ergaben sich folgende Nachteile:

- Bei der Konstruktion dünnwandiger, außen glatter Verschlußkappen ist es fast unmöglich, an der Verschlußwandung Halteelemente vorzusehen, die den Mantel der Verschlußkappe in seiner Position in der Spritzgußform festhalten, während der Gewindekern der Form zum Abschrauben gedreht wird.

- Die Spritzgußform selbst muß wegen der Zusatzfunktionen aufwendiger hergestellt werden, und der Spritzzyklus wird durch den Abschraubvorgang verlängert.

- Hinterschneidung oder Vorsprünge innerhalb der Verschlußkappe oberhalb ihres Gewindes lassen sich nur herstellen, wenn der Gewindekern als sogenannter "Klappkern" ausgebildet ist und aus mehreren Teilen bestent, die beim Entformungsvorgang zusammenfallen und dadurch das Innere der Verschlußkappe für die Axialbewegung freigeben. Ein solches Werkzeug wird aber sehr komplex und für das Produkt und seinen Markt zu teuer.

Durch die vorliegende Erfindung soll eine Verschlußkappe geschaffen werden, die in der Lage ist, eine axiale Dichtkraft auszuüben und auf eine Behältermündung leicht aufgebracht und von ihr wieder abgenommen werden kann. Die Verschlußkappe soll nicht die Nachteile bekannter Schraubverschlüsse haben. Insbesondere soll sie leicht in axialer Richtung entformbar sein, ohne daß sich innere Vorsprünge (Nocken) außen mehr als in vernachlässigbarem Ausmaß abzeichnen. Dennoch soll die Schraubkappe bei festem Aufbringen mittels Schraub- oder Prell-Schraub-Vorgang eine axiale Dichtkraft ausüben. Die Verschußkappe soll das Anbringen von Funktionselementen oberhalb der Vorsprünge (Nocken) auf dem Innenmantel erlauben und in der Herstellung der Spritzgußform und des Artikels kostengünstiger sein. All dies zugleich wird durch die Erfindung nach Anspruch 1 erreicht.

Werden Kunststoff-Flaschen mit sehr dünnen Wendungen verwendet, so würden die Flaschen beim Aufprellen einer Verschlußkappe zusammengestaucht werden. Hier läßt sich vorteilhaft eine Verschlußkappe nach der Erfindung, die nach Art eines Prellverschlusses hergestellt ist, als Schraubverschluß aufbringen.

Weiterbildungen der Erfindung ergeben sich aus den Unteransprüchen. Nach Anspruch 2 lassen sich durch besondere Ausgestaltung der Wölbungen oder Abschrägungen der Nocken deren Herausgleiten aus dem Formkern erleichtern und damit Spuren an der Außenwand der Verschlußkappe noch weiter verringern oder ganz beseitigen.

Nach Anspruch 3 können die Zwischenräume zwischen den Nocken eine bestimmte Mindestgröße haben. Je kleiner die Zwischenräume, desto sauberer die Schraubfunktion; je größer sie sind, desto weniger zeichnen sich die Nocken an der Außenwandung der Verschlußkappe ab.

Liegen die Nocken an der Innenwand der Verschlußkappe auf mehr als einer gedachten Schraubenlinie, beschreiben sie also mehr als einen Umlauf, so können vorteilhafterweise nach Anspruch 5 die Nocken auf jeweils einander benachbarten Schraubenlinien in Umfangsrichtung gegeneinander versetzt sein.

Bei Kunststoff-Flaschen mit Gewindemündung taucht das Problem auf, daß Verschlußkappen sich nach dem Zuschrauben von selbst wieder lösen, besonders dann, wenn Flaschenmündungen beim Zuschrauben naß sind und/oder mehrgängige Gewinde haben. Nach Anspruch 6 läßt sich auf einfache Weise, nämlich durch Ausgestaltung eines der Nocken eine Rückdrehsperre bilden, die mit einem entsprechenden Vorsprung an der Behältermündung zusammenwirkt.

Nach Anspruch 7 läßt sich die Rückdrehsperre so gestalten, daß der Benutzer die Verschlußkappe mit einigem Kraftaufwand wieder abschrauben kann.

Nach Anspruch 8 soll dagegen ein Abschrauben vollständig verhindert werden, es sei denn, unter gewaltsamer Zerstörung der zusammenwirkenden Elemente.

Ausführungsbeispiele mit weiteren Merkmalen der Erfindung werden im folgenden anhand der Zeichnungen beschrieben.

Figur 1          ist ein Längsschnitt durch eine Schraubhülse nach der Erfindung.

Figur 2 bis 5    sind schematisierte Teilquerschnitte durch Schraubhülsen nach der Erfindung mit Segmenten anderer Formen.

Figur 6          ist ein Teilquerschnitt durch eine Schraubhülse mit einer Rückdrehsperre.

Figur 7          ist eine Seitenansicht einer Flaschenmündung mit Rückdrehsperre.

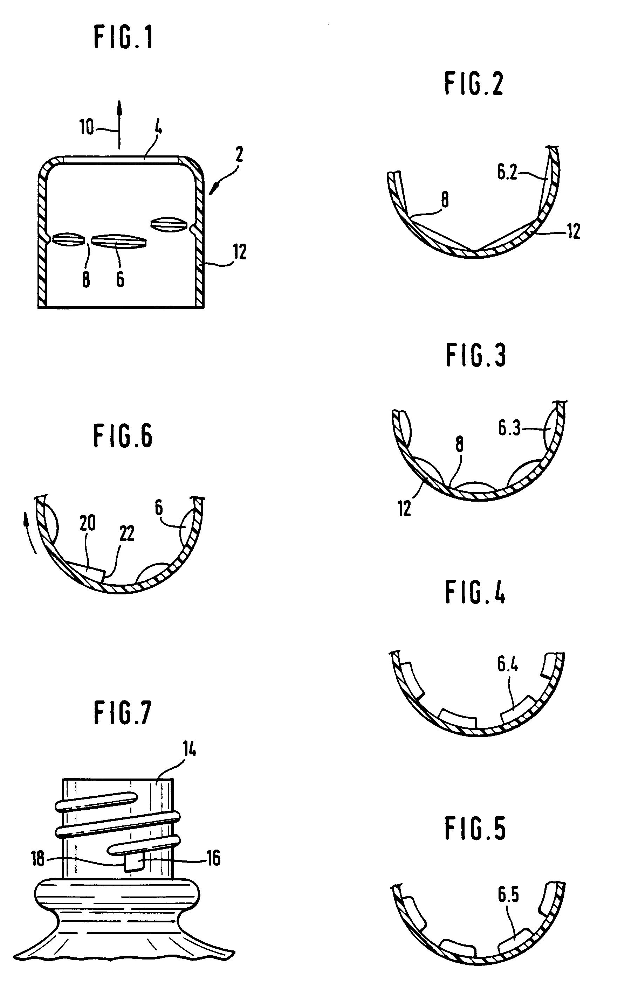

Figur 1 zeigt eine Schraubhülse 2 in Form einer Kappe mit einer großen Entnahmeöffnung 4. Die Erfindung ist auf Kappen sehr verschiedener Art anwendbar sowie auf rein kreiszylindrische oder konische Schraubhülsen. Wesentlich ist, daß das Gewinde der Schraubhülse in einzelne nach innen vorspringende Segmente 6 unterteilt ist. Figur 1 zeigt ein Gewinde mit nur einer einzigen Gewindeschnur. Die Segmente sind gleichmäßig über den Innenumfang verteilt. Zwischen je zwei Segmenten befindet sich ein Zwischenraum 8 von 0,5 oder mehr mm in Umfangsrichtung. Nach dem Spritzgießvorgang wird die Schraubhülse 2 von dem hier nicht dargestellten Formkern in Richtung des Pfeils 10 abgezogen. Dabei wird die Wand der Schraubhülse gedehnt, besonders an den Stellen außerhalb der Segmente.

Wie Figur 1 zeigt, sind die obere und die untere Fläche der Segmente 6 ausgebaucht. Wesentlich ist dies hauptsächlich für die obere Fläche, denn diese muß beim Entformen dafür sorgen, daß die Segmente aus den entsprechenden Formvertiefungen herausgleiten können. Die oberen Flächen können schräge Ebenen sein oder gewölbte Flächen oder radial verlaufende Flächen, die gegen den Innenraum verrundet sind.

Die Segmente können verschiedene Formen haben, wie es in den Figuren 2 bis 5 für die dort vorgesehenen Segmente 6.2 bis 6.5 dargestellt ist. Nach Figur 2 haben sie eine gerade innere Berandung, nach Figur 3 eine bogenförmige. Nach Figur 4 sind die Segmente etwa trapezförmig gestaltet, während sie nach Figur 5 an ihren Enden abgerundet sind, alles in axialer Richtung betrachtet. Verjüngen sich die Segmente in Umfangsrichtung nach ihren Enden zu, wie es speziell die Figuren 2 und 3 zeigen, so können von diesen Endabschnitten der Segmente größere Dehnungen aufgenommen werden als von ihren mittleren Abschnitten. Dies wirkt also zusätzlich einem Abzeichnen der Segmente an der Außenwandung der Schraubhülse entgegen. Dagegen haben die Segmente nach den Figuren 4 und 5 den Vorteil größerer Festigkeit, können also zur Übertragung größerer Schließkräfte verwendet werden.

Die Figuren 6 und 7 zeigen einen Teil einer Schraubhülse bzw. eine Flaschenmündung mit Rückdrehsperre. Die Flaschenmündung 14 hat zu diesem Zweck am unteren ihres Gewindes einen radialen Vorsprung 16. Der Vorsprung hat eine Wand 18, die in einer Axial-Radial-Ebene liegt. Figur 6 ist ein teilweiser Schnitt quer zur Achse durch eine zugehörige Schraubhülse, wobei die Schnittebene oberhalb der dargestellten Segmente liegt. Die Blickrichtung verläuft in Bezug auf die Gewindemündung der Figur 7 abwärts.

Während die meisten Segmente 6 wie oben beschrieben ausgebildet sind, hat mindestens eines von ihnen (20) eine Sperrfläche 22, die beim vollständigen Zuschrauben hinter die Wand 18 des Vorsprungs 16 der Flaschenmündung schnappt. Das als Rückdrehsperre ausgebildete Segment 20 kann das entsprechend Figur 7 unterste sein, das also beim Zuschraubvorgang voranläuft. Stattdessen kann es an anderer Stelle vorgesehen sein. Es können auch mehrere Segmente als Rückdrehsperre ausgebildet sein.

Verlaufen die Wand 18 der Flaschenmündung und die Sperrfläche 22 des Segments 20 radial, so wird nach dem Hinterschnappen ein Rückdrehen verhindert. Unter Berücksichtigung der Dehnfähigkeit der Kunststoffe läßt sich eine größere Sicherheit gegen Rückdrehen dadurch schaffen, daß man beide Flächen gegenüber der Axial-Radial-Ebene noch in dem Sinne neigt, daß die beiden Teile, nämlich Segment 20 und Vorsprung 16, sich bei einer Belastung in Rückdrehrichtung noch mehr verkeilen.

Soll stattdessen ein Rückdrehen noch möglich sein aber ein selbständiges Lösen des Verschlusses ausgeschlossen werden, so können die Sperrfläche 22 und die Wand 18 im Gegensinne geneigt werden, also derart, daß das Segment 20 beim Rückdrehen nach außen gedrückt wird und dann über den Vorsprung 18 zurückschnappt.

Wird durch die Segmente 6 bis 6.5 ein Gewinde mit mehr als einer Gewindeschnur gebildet, so sollten die Segmente der einen Gewindeschnur gegenüber denen der nächsten und gegenüber denen gegebenenfalls weiterer Gewindeschnüre in Umfangsrichtung versetzt sein. Dadurch wird verhindert, daß Segmente beim Entformen von einer Vertiefung des Formkerns in die nächste schnappen, was zu einer widerholten Dehnung der Wand 12 der Schraubhülse führen würde und die Gefahr mit sich brächte, daß sich die Segmente an deren Außenwandung dann doch abzeichnen.

## Patentansprüche

1. Verschlußkappe aus Kunststoff mit nach innen vorstehenden Nocken, nach Art eines (Auf-)Prellverschlusses, hergestellt im Spritzgußverfahren unter Anwendung einer axialen Entformungsbewegung, wobei die Nocken von je einer gedachten, aus der Innenwand vorspringenden Ebene aus nach oben und unten gewölbt und/oder abgeschrägt sind, **dadurch gekennzeichnet,** daß die im wesentlichen senkrecht zur Kappenachse angeordneten Ebenen der einzelnen Nocken an der Verschlußinnenwand stufenweise derart gegeneinander versetzt sind, daß ihre an der Innenwand liegenden Mittelpunkte auf einer gedachten Schraubenlinie liegen, entsprechend einer Gewindeschnur des Außengewindes einer zu verschließenden Behältermündung.

2. Verschlußkappe nach Anspruch 1, **dadurch gekennzeichnet,** daß die Wölbung oder Abschrägung derjenigen Seite der Nocken, die beim Entformen aus Vertiefungen des Kerns der Spritzform herausgleiten muß, gegenüber der Innenwand der Verschlußkappe stärker geneigt ist, als die Wölbung oder Abschrägung der Gegenseite der Nocken.

3. Verschlußkappe nach Anspruch 1 oder 2, **dadurch gekennzeichnet,** daß die Nocken in Umfangsrichtung durch Zwischenräume von mindestens je 0,4 mm voneinander getrennt sind.

4. Verschlußkappe nach einem der vorangehenden Ansprüche, **dadurch gekennzeichnet,** daß die Nocken in Umfangsrichtung 3 mm bis 10 mm lang sind.

5. Verschlußkappe nach einem der vorangegangenen Ansprüche, **dadurch gekennzeichnet,** daß die Mittelpunkte der Nocken auf mehr als einer gedachten Schraubenlinie auf der Verschlußinnenwand angeordnet sind und die Nocken auf jeweils einander benachbarten Schraubenlinien in Umfangsrichtung gegeneinander versetzt sind.

6. Verschlußkappe nach einem der vorangegangenen Ansprüche, **dadurch gekennzeichnet,** daß im Bereich der Nockenanordnung ein Vorsprung die Form einer Rückdrehsperre hat, die mit einem entsprechenden Vorsprung an der Behältermündung zusammenwirkt.

7. Verschlußkappe nach Anspruch 6, **dadurch gekennzeichnet,** daß die Rückdrehsperre in Rückdrehrichtung soweit geneigt ist, daß ein Anschlag spürbar bleibt, der aber durch gewollte Kraftanstrengung überwindbar ist.

8. Verschlußkappe nach Anspruch 6, **dadurch gekennzeichnet,** daß die Rückdrehsperre radial verläuft oder in Zudrehrichtung geneigt ist, so daß ein Rückdrehen nur unter gewaltsamer Zerstörung eines der zusammenwirkenden Elemente möglich ist.

## Claims

1. A closure cap of synthetic resin with inwardly projecting lugs of the snap-on type, produced by injection molding involving an axially directed demolding step, said lugs being curved and/or slanted upwards and downwards from a respective imaginary plane projecting out of the inner wall surface, characterized in that the planes, which are essentially perpendicular to the axis of the cap, of the individual lugs are so offset by being staggered on the inner wall surface of the closure that their center points present on the inner wall surface are on an imaginary helical line corresponding to the thread member of the external screw thread of a container mouth to be closed.

2. The closure cap as claimed in claim 1, characterized in that the curvature or slant of that side of the lugs, which has to slide out of recess in the core of the injection mold during demolding is at a larger angle in relation to the inner wall surface of the closure cap than the curvature or slant of the opposite side of the lugs.

3. The closure cap as claimed in claim 1 or in claim 2, characterized in that in the circumferential direction the lugs are separated from each other by intermediate spaces of at least 0.4 mm.

4. The closure cap as claimed in any one of the preceding claims, characterized in that the lugs have a length of 3 mm to 10 mm in the circumferential direction.

5. The closure cap as claimed in any one of the preceding claims, characterized in that the center points of the lugs are arranged on more than one imaginary helical line on the inner surface of the closure and the lugs of mutually adjacent helical lines are arranged offset to each other in the circumferential direction.

6. The closure cap as claimed in any one of the preceding claims, characterized in that in the lug arrangement one projection has the form of a reverse rotation lock, which cooperates with a corresponding projection on the mouth of the container.

7. The closure cap as claimed in claim 6, characterized in that the reverse rotation lock is slanted in the direction of reverse turning so far that an abutment can be sensed but can be overcome by intentional application of force.

8. The closure cap as claimed in claim 6, characterized in that the reverse rotation lock extends radially or in the direction of putting on the closure so that a reverse turning is only possible on damaging one of the cooperating elements by force.

**Revendications**

1. Capsule en plastique avec ergots saillant vers l'intérieur, à la manière d'une fermeture à impact (à enfoncer), réalisé en procédé de moulage par injection en utilisant un mouvement de démoulage axial, les ergots étant arqués et/ou chanfreinés vers le haut et le bas respectivement à partir d'un plan imaginaire en saillie sur la paroi intérieure, caractérisée par le fait que les plans des ergots individuels, dirigés pour l'essentiel verticalement vers l'axe du capuchon, sont décalés de telle sorte les uns par rapport aux autres, que leurs centres se trouvant sur la paroi intérieure soient situés sur une hélice imaginaire correspondant à une spire du filet extérieur d'une embouchure de récipient à fermer.

2. Capsule selon revendication 1, caractérisée par le fait que la courbure ou le chanfrein du côté des ergots qui doit glisser hors de cavités du noyau du moule d'injection lors du démoulage, soit plus fortement penché vers la paroi intérieure du bouchon que la courbure ou le chanfrein du côté opposé des ergots.

3. Capsule selon revendication 1 ou 2, caractérisée par le fait que les ergots sont séparés les uns des autres dans le sens de la circonférence par des intervalles d'au moins 0,4 mm chaque.

4. Capsule selon l'une des revendications précédentes, caractérisée par le fait que les ergots présentent 3 à 10 mm de long dans le sens de la circonférence.

5. Capsule selon l'une des revendications précédentes, caractérisée par le fait que les centres des ergots sont disposés sur plus d'une spire imaginaire de la paroi intérieure de la capsule et que les ergots sont décalés les uns par rapport aux autres sur les spires respectivement voisines dans le sens de la circonférence.

6. Capsule selon l'une des revendications précédentes, caractérisée par le fait que dans le champ de disposition des ergots, une saillie présente la forme d'un blocage rotation inverse, et agit conjointement avec une saillie correspondante à l'embouchure du récipient.

7. Capsule selon revendication 6, caractérisée par le fait que le blocage rotation inverse est incliné aussi loin qu'un enclenchement reste perceptible, mais peut être surmonté par l'utilisation voulue de la force.

8. Capsule selon revendication 6, caractérisée par le fait que le blocage rotation inverse a un tracé radial ou est incliné dans le sens du serrage, de sorte qu'une rotation inverse n'est possible qu'en détruisant par la force l'un des éléments agissant conjointement.

FIG.1

FIG.2

FIG.6

FIG.3

FIG.7

FIG.4

FIG.5